## Europäisches Patentamt
## European Patent Office
## Office européen des brevets

(19)

(11) Veröffentlichungsnummer: **0 095 586**
**B1**

(12) **EUROPÄISCHE PATENTSCHRIFT**

(45) Veröffentlichungstag der Patentschrift:
03.09.86

(51) Int. Cl.⁴: **A 47 J 41/02**

(21) Anmeldenummer: **83104313.8**

(22) Anmeldetag: **02.05.83**

(54) **Doppelwandiges Isoliergefäss.**

(30) Priorität: **01.06.82 DE 3220558**

(43) Veröffentlichungstag der Anmeldung:
**07.12.83 Patentblatt 83/49**

(45) Bekanntmachung des Hinweises auf die Patenterteilung:
**03.09.86 Patentblatt 86/36**

(84) Benannte Vertragsstaaten:
**AT BE CH FR GB IT LI LU NL SE**

(56) Entgegenhaltungen:
**DE-A-1 960 797**
**DE-B-1 188 628**
**DE-C-521 658**
**GB-A-579 265**
**US-A-2 176 012**
**US-A-3 337 073**

(73) Patentinhaber: **Rotpunkt Dr. Anso Zimmermann,
Industriestrasse, D-6434 Niederaula / Bad
Hersfeld (DE)**

(72) Erfinder: **Zimmermann, Anso, Dr., Seilerweg 34,
D-6434 Niederaula/Bad Hersfeld (DE)**

(74) Vertreter: **Körber, Wolfhart, Dr., Patentanwälte
Dipl.- Ing. H. Mitscherlich Dipl.- Ing. K.
Gunschmann Dr.rer.nat. W. Körber Dipl.Ing. J.
Schmidt- Evers Dipl.- Ing. W. Melzer
Steinsdorfstrasse 10, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein doppelwandiges bauchiges Isoliergefäß nach dem Oberbegriff des Patentanspruchs.

Bisher bekannte doppelwandige Isoliergefäße dieser Art - wie beispielsweise in einer Isolierkanne nach der US-A-1,293,292 verwendet - sind mit ihrem Hals und der Ausgießöffnung rotations-symmetrisch ausgebildet. Bei bauchigen Isoliergefäßen ist die rotationssymmetrische Gestaltung jedoch nachteilig, da sich ein ungünstiger Ausgießwinkel insbesondere für das letzte Drittel des Inhaltes eines solchen Gefäßes ergibt.

Ein doppelwandiges bauchiges Isoliergefäß der im Oberbegriff des Anspruches 1 genannten Art ist aus der DE-A-19 60 797 bekannt geworden. Dort ist beschrieben, daß doppelwandige Isoliergefäße aus Glas herstellungstechnisch sehr aufwendig sind und sich Wärmebrücken nur schwer vermeiden lassen. Es wird statt dessen von doppelwandigen Isoliergefäßen, bei denen beide Wände aus Glas bestehen, abgegangen, und es werden statt dessen einwandige verspiegelte Glasgefäße als Isoliereinsätze vorgeschlagen. Erst dieser Schritt ermögliche es, auch zu Ausführungen von bauchigen Isoliergefäßen mit einer exzentrischen Lage der Ausgießöffnung zu kommen.

Der Erfindung liegt die Aufgabe zugrunde, ein doppelwandiges bauchiges Isoliergefäß mit exzentrisch liegender Ausgießöffnung zu schaffen, welches aus ein und demselben Werkstoff, nämlich Glas, besteht.

Zur lösung dieser Aufgabe ist ein bauchiges Isoliergefäß der im Oberbegriff des Anspruches 1 genannten Art erfindungsgemäß dadurch gekennzeichnet, daß beide Wände des Isoliergefäßes aus Glas sind und der Innenkolben in einem zunächst vorgefertigten Außenkolben durch ein Werkzeug von außen durch die Halsöffnung eingedrückt ist.

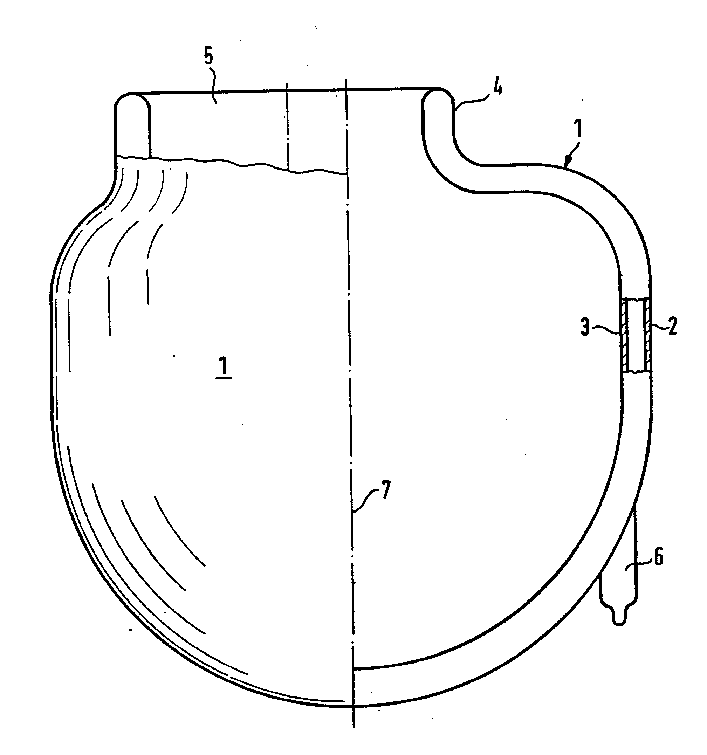

Zwar ist in der DE-C-521 658 ein nichtbauchiges doppelwandiges Einsatzgefäß dargestellt, dessen obere, durch einen Verschlußkorken verschließbare Einfüllöffnung exzentrisch liegt. Das Einsatzgefäß weist zusätzlich zur Einfüllöffnung eine seitliche Ausgießöffnung auf, welche durch den gleichen Verschlußkorken verschlossen oder freigegeben werden kann. Dieses Einsatzgefäß gibt keine Anregung für die erfindungsgemäß exzentrische Anordnung der Ausgießöffnung bei einem bauchigen Isoliergefäß, zumal die der Erfindung zugrunde liegende Problematik durch das Vorhandensein der gesonderten Ausgießöffnung nicht besteht und keine Erläuterung für die nur aus der Zeichnung ersichtliche geringe exzentrische Lage der Einfüllöffnung gegeben ist.

Durch die exzentrische Lage des Halses und der einzigen Öffnung ist ein solches Isoliergefäß auch in bauchiger Ausbildung günstig als Kaffeekanne in einer Kaffeemaschine zu integrieren. Die exzentrische, seitliche Lage der Öffnung einer solchen Kaffeekanne erlaubt ein nahes Einstellen in die Kaffeemaschine unter den Filterausfluß.

Als weiterer Vorteil ergibt sich eine besonders leichte Handhabung eines solchen bauchigen Isoliergefäßes beim Ausgießen. Der Ausgießwinkel wird durch die exzentrische Lage der Ausgießöffnung kleiner, so daß auch der letzte Rest des Inhaltes einer solchen Kanne ausgegossen werden kann, ohne die Kanne auf den Kopf stellen zu müssen. Nicht zuletzt läßt das erfindungsgemäße exzentrische bauchige Isoliergefäß elegantere und modernere Formgebungen zu, die neuen Gestaltungen von Isolierkannen einen weiten Raum bieten.

In der einzigen Figur der beigefügten Zeichnung ist schematisch teilweise im Schnitt ein unsymmetrisches, bauchiges Isoliergefäß in Ansicht dargestellt. Es wird betont, daß die Zeichnung rein schematisch ist, um das Prinzip der Erfindung zu erläutern, ohne daß die Proportionen des Gefäßes eingeschränkt sind.

Das insgesamt mit 1 bezeichnete Isoliergefäß ist doppelwandig und besteht aus einem Außenkolben 2 und einem Innenkolben 3. Der Hals des Gefäßes 1 ist mit 4 und die Ausgießöffnung mit 5 bezeichnet. Mit 6 ist der Abpumpstutzen bezeichnet. Hals 4 und Ausgießöffnung 5 sind gegenüber der vertikalen Mittelachse 7 des Gefäßes 1 exzentrisch versetzt, so daß ein unsymmetrisches bauchiges Gefäß 1 gegeben ist.

## Patentanspruch

Doppelwandiges, bauchiges Isoliergefäß (1), bei dem der Raum zwischen den Wänden evakuiert, eine der Wände verspiegelt und die innere der Wände aus Glas ist, bei dem der, die äußere Wand bildende Außenkolben (2) und der die innere Glaswand bildende Innenkolben (3) die gleiche Kontur haben und die Wände im wesentlichen gleichen Abstand haben und bei dem die die Ausgießöffnung (5) bildende Halsöffnung exzentrisch zur vertikalen Symmetrieachse (7) des Gefäßes (1) liegt, dadurch gekennzeichnet, daß beide Wände des Isoliergefäßes (1) aus Glas sind und der Innenkolben (3) in einem zunächst vorgefertigten Außenkolben (2) durch ein Werkzeug von außen durch die Halsöffnung eingedrückt ist.

## Claim

A double-walled, bellied insulating container (1), wherein the space between the walls is evacuated, one of said walls is mirrored and the inner wall of said walls is made of glass, wherein the outer flask (2) forming the outer wall and the inner flask (3) forming the inner glass wall have the same contours and the walls are separated from each other by a substantially constant distance, and wherein the neck opening, which forms the pouring spout (5), is eccentric with respect to the vertical axis of symmetry (7) of the container (1), characterized in

that both walls of the insulating container (1) are made of glass and the inner flask (3) is pressed in through the neck opening from the outside into a prefabricated outer flask (2) by means of a tool.

## Revendication

Récipient isolant (1) renflé, à double paroi, dans lequel l'espace entre les parois a été mis sous vide, une des parois étant métallisée et la paroi intérieure étant en verre, dans lequel le ballon extérieur (2) formant la paroi extérieure et le ballon intérieur (3) formant la paroi de verre intérieure ont le même contour, les parois présentant essentiellement la même distance entre elles et dans lequel l'ouverture du goulot formant l'ouverture verseuse (5) est excentrique par rapport à l'axe vertical de symétrie (7) du récipient (1), caractérisé en ce que les deux parois du récipient isolant (1) sont en verre et que le ballon intérieur (3) est enfoncé de l'extérieur, au moyen d'un outil, par l'ouverture du goulot, dans un ballon extérieur (2) fabriqué à l'avance.